# FASCICULE DE BREVET EUROPEEN

(11) **EP 2 635 451 B1**
(45) Date de publication et mention de la délivrance du brevet: **13.05.2015**
(21) Numéro de dépôt: 11787922.1
(22) Date de dépôt: 25.10.2011
(51) Int. Cl.: B60H 1/00

(54) **PROCEDE ET DISPOSITIF DE REGULATION THERMIQUE**
VERFAHREN UND EINRICHTUNG ZUR THERMISCHEN REGELUNG
DEVICE AND METHOD FOR THERMAL REGULATION

(30) Priorité: 04.11.2010 FR 1059112
(43) Date de publication de la demande: 11.09.2013
(73) Titulaire: Peugeot Citroën Automobiles SA, 78140 Vélizy Villacoublay (FR)
(72) Inventeur: LEFEBVRE, Ludovic, F-92700 Colombes (FR)
(74) Mandataire: Rosenberg, Muriel Sylvie
(86) Numéro de dépôt international: PCT/FR2011/052481
(87) Numéro de publication internationale: WO 2012/059663

(56) Documents cités:
- WO-A1-2008/025916
- FR-A1- 2 897 016
- US-A1- 2008 028 768

## Description

### DOMAINE TECHNIQUE DE L'INVENTION

La présente invention se rapporte à un procédé de régulation thermique et à un dispositif associé. Le domaine technique de l'invention est, d'une façon générale, celui des véhicules pouvant être branchés à une source d'énergie extérieure, par exemple électrique : véhicules électriques et hybrides de type automobile, véhicules dont la batterie haute tension de traction est rechargeable, et véhicules notamment destinés aux marchés de pays froids. Plus particulièrement, l'invention concerne le contrôle thermique de l'habitacle et du moteur à combustion.

### ARRIERE PLAN TECHNOLOGIQUE DE L'INVENTION

Le confort thermique des passagers de véhicules électriques et hybrides pose problème lorsque la température ambiante extérieure est sensiblement différente d'une température dite tempérée de l'ordre de 20°C.

En effet, en ce qui concerne le chauffage de l'habitacle de ces véhicules, si la source traditionnelle de chaleur, c'est-à-dire le moteur à combustion, est inexistante ou qu'elle n'a pas encore été démarrée ou depuis trop peu de temps et à une puissance insuffisante, les calories apportées à l'aérotherme sont inexistantes ou insuffisantes. Pour rappel, l'aérotherme est un échangeur thermique dont la fonction est de réchauffer l'air pulsé dans l'habitacle. Ce réchauffement, pour un véhicule automobile comprenant un moteur à combustion interne à refroidissement liquide, est obtenu par un échange calorifique entre le liquide caloporteur de refroidissement dudit moteur dans un circuit dit de chauffage comprenant ledit aérotherme. Ainsi, la chaleur du moteur thermique est transmise au fluide caloporteur qui la transmet à son tour à l'habitacle.

Or, l'hybridation se développant, avec en particulier l'option dite plug-in de recharge par branchement à une source d'énergie extérieure, le moteur à combustion est plus souvent et plus longtemps arrêté.

Pour chauffer l'habitacle, il est possible de démarrer le moteur à combustion voire d'accélérer sa montée en température, mais cela dégrade sa combustion, augmente sa consommation et ses émissions polluantes. Autrement dit, cela annule tout l'intérêt d'une chaîne de traction hybride.

Par ailleurs, il est possible de disposer sur le circuit du fluide caloporteur des moyens de chauffage auxiliaires tels que des résistances électriques ou des résistances à coefficient de température positif (CTP) associées à une pompe électrique pour amener le liquide réchauffer à l'aérotherme, ou une chaudière autonome. On peut aussi placer des résistances électriques chauffant l'air à son entrée dans l'habitacle, lesdites résistances étant associées à un pulseur électrique pour souffler l'air ainsi chauffé dans l'habitacle.

Dans l'état de la technique, on connaît l'enseignement des documents WO2007090965 et EP1167713 qui divulguent des systèmes de préconditionnement thermique avec plusieurs circuits de grande longueur.

En pratique, la longueur des circuits de régulation thermique influence directement le rendement énergétique du dispositif. Autrement dit, plus ledit circuit est long, plus les déperditions thermiques générées, notamment dans le bloc moteur, sont importantes. L'énergie thermique injectée dans le circuit n'est donc pas entièrement consacrée au chauffage de l'habitacle, ce qui provoque soit une prestation thermique insuffisante, soit une surconsommation d'énergie électrique pour atteindre la prestation souhaitée.

De plus, l'énergie thermique dissipée dans ce cas dans le bloc moteur n'est alors pas utile à son fonctionnement car la puissance thermique mise en jeu est trop faible vis-à-vis de l'inertie thermique à atteindre. On entend par inertie thermique la masse et le volume de fluide à chauffer par conduction uniquement puisque, le moteur à combustion n'étant pas démarré, l'huile n'est pas débitante.

### DESCRIPTION GENERALE DE L'INVENTION

L'invention propose de résoudre les problèmes techniques précédemment cités. Dans l'invention, pour que l'énergie électrique consacrée à la régulation thermique de l'habitacle et du moteur à combustion soit exploitée de façon optimisée et n'empêche pas le démarrage du véhicule dans un mode totalement électrique, on utilise l'énergie électrique disponible du secteur électrique externe pendant ou après la recharge de la batterie.

L'énergie stockée dans la batterie est alors consacrée au roulage du véhicule et au maintien du confort thermique établi dans l'habitacle lors de la phase de préconditionnement thermique de l'habitacle.

L'invention a donc pour objet un procédé de régulation thermique, pour un véhicule de type automobile, ladite régulation étant assurée par un fluide caloporteur parcourant un circuit hydraulique fermé comprenant
- une pompe électrique à fluide,
- un moyen de régulation thermique dudit fluide,
- un échangeur thermique traversé par ledit fluide,
ledit procédé comportant des étapes dans lesquelles
- on mesure une température d'habitacle,
caractérisé en ce que
- on compare la température d'habitacle à une première température prédéfinie et,
- lorsque lesdites températures sont différentes, on pilote ledit circuit jusqu'à ce que lesdites températures soient sensiblement égales ;
- on recharge la batterie en la branchant à une source d'énergie électrique extérieure,
- on mesure la charge de ladite batterie, et
- lorsque la batterie est totalement chargée, on utilise l'énergie électrique de ladite source extérieure pour piloter le circuit hydraulique ;
- on prévoit une heure de départ du véhicule,
- on calcule une durée de nécessaire pour réguler thermiquement le moteur thermique et/ou l'habitacle,
- on détermine une heure de démarrage du pilotage du circuit hydraulique,
- on démarre ledit pilotage à l'heure déterminée,
- on compare l'heure réelle d'arrivée du conducteur avec l'heure prévue, et
- lorsque le véhicule part avant ou à l'heure prévue, on utilise l'énergie électrique de la batterie pour piloter le circuit hydraulique jusqu'à ce que la batterie atteigne un niveau de charge prédéterminé à partir duquel on démarre le moteur à combustion,
- lorsque, à l'heure prévue, le véhicule n'est toujours pas parti, on maintient ledit pilotage pendant une durée prédéfinie à la fin de laquelle
   - lorsque le véhicule est parti, on utilise l'énergie électrique de la batterie pour piloter le circuit hydraulique jusqu'à ce que la batterie atteigne ledit niveau de charge,
   - lorsque le véhicule n'est pas parti, on arrête ladite régulation.

Grâce à ces dispositions, le conducteur évolue dans des conditions thermiques de conduite confortables.

Grâce à ces dispositions, on augmente l'autonomie électrique et on diminue la consommation en carburant car le moteur thermique et/ou d'éventuels artifices électriques sont moins fréquemment mis en oeuvre pour la régulation thermique de l'habitacle et/ou du moteur thermique pendant le roulage du véhicule.

Grâce à ces dispositions,
- on peut démarrer le moteur thermique à des températures extérieures très faibles sans entamer la durée de vie des bougies de préchauffage,
- on réduit des bruits de combustion, de l'acyclisme et des vibrations,
- on monte plus rapidement en couple et en régime, et
- on élargit le champ d'autorisation de démarrages sécuritaires en cas de dépassement de véhicule et d'insertion dans une circulation, par exemple.

Selon des caractéristiques particulières,
- on détermine une température d'un moteur à combustion associé à une pompe à fluide, ledit moteur et ladite pompe faisant partie du circuit hydraulique et étant traversés par ledit fluide,
- on compare la température dudit moteur à une deuxième température prédéfinie et,
- lorsque lesdites températures sont différentes, on pilote ledit circuit hydraulique jusqu'à ce que lesdites températures soient sensiblement égales.

Grâce à ces dispositions, on diminue, à l'usage, la consommation en carburant et, par une chambre de combustion réchauffée, on réduit les émissions polluantes.

Grâce à ces dispositions, on évite certaines phases d'interdiction d'arrêt dudit moteur dues notamment au possible gel de condensats de gaz brûlés ou non, passant du haut vers le bas moteur, entre segments et cylindre, et dues à l'amorçage d'organes de dépollution. Ainsi, le moteur thermique peut être plus souvent et plus longtemps arrêté et on augmente donc la disponibilité de la mobilité totalement électrique.

Selon des caractéristiques particulières, lorsque le véhicule est parti, on pilote le circuit hydraulique notamment en fonction d'une commande de température d'habitacle actionnée par le conducteur, d'une mesure de température du moteur thermique, de température habitacle et/ou d'une mesure de température extérieure.

Les inventeurs ont déterminé que ces dispositions étaient optimales.

Selon des caractéristiques particulières, pour déterminer la température du moteur à combustion, on mesure une température du fluide à la sortie dudit moteur et une température d'huile,
- on régule ledit moteur jusqu'à ce que
- la température du fluide soit supérieure ou égale à 40°C et la température de l'huile soit supérieure à 30°C, ou
- la durée de régulation nécessaire calculée soit dépassée.

Les inventeurs ont déterminé que ces dispositions étaient optimales.

L'invention a également pour objet un dispositif de régulation thermique , pour un véhicule de type automobile comportant une batterie rechargeable, un calculateur, un moteur électrique et un capteur de température d'habitacle, comprenant un circuit hydraulique fermé transportant un fluide caloporteur, ledit circuit comprenant
- une pompe électrique à fluide,
- un moyen de régulation thermique dudit fluide,
- un échangeur thermique traversé par ledit fluide,
caractérisé en ce que
- le calculateur est adapté à comparer la température d'habitacle à une première température prédéfinie et, lorsque lesdites températures sont différentes, à piloter ledit circuit jusqu'à ce que lesdites températures soient sensiblement égales ;
- le circuit hydraulique comporte en outre un moteur à combustion associé à une pompe mécanique à fluide, et au moins un capteur de température dudit moteur, ledit moteur et ladite pompe étant traversés par ledit fluide,
- le calculateur est adapté à comparer la température dudit moteur à une deuxième température prédéfinie et, lorsque lesdites températures sont différentes, à piloter ledit circuit hydraulique jusqu'à ce que lesdites températures soient sensiblement égales ;
le dispositif étant en outre caractérisé en ce que
- il comporte en outre un capteur de température extérieure,
- le moyen de régulation est un réchauffeur,
- l'échangeur est un aérotherme,
- le fluide est un liquide de type liquide de refroidissement,
- le capteur de température du moteur à combustion comporte un capteur de température du liquide et un capteur de température d'huile,
- le circuit comporte en outre
   - une vanne présentant au moins deux positions et étant disposée à l'intersection de quatre conduits dudit circuit, le premier conduit étant issu du réchauffeur, le deuxième conduit étant issu de l'aérotherme, le troisième conduit étant parallèle au deuxième conduit, et le quatrième conduit étant issu de la pompe mécanique et comportant un premier clapet anti-retour,
   - une deuxième intersection de trois conduits, le premier conduit comportant un deuxième clapet anti-retour, le deuxième conduit étant issu de la pompe électrique, et le troisième conduit étant issu du moteur à combustion,
   - une troisième intersection de trois conduits, le premier conduit étant celui parallèle à l'aérotherme, le deuxième conduit étant celui comportant le deuxième clapet, et le troisième conduit étant issu de l'aérotherme,
   - au moins un capteur de température de fluide positionné entre la pompe électrique et la vanne, préférentiellement en sortie du réchauffeur.

Les avantages, buts et caractéristiques particuliers de ce dispositif étant similaires à ceux du procédé objet de la présente invention, ne sont pas rappelés ici.

En outre, grâce à ces dispositions, on obtient :
- une première boucle courte de circuit qui permet de réchauffer le moteur à combustion de façon efficace en s'affranchissant alors de la principale source de déperdition thermique, c'est-à-dire l'aérotherme de chauffage de l'habitacle. Cette configuration du circuit permet au moteur à combustion de monter plus rapidement en température car son débit interne est optimisé et la température du fluide à son entrée est de plus en plus chaude ;
- une seconde boucle courte de circuit qui permet de réchauffer l'habitacle de façon efficace en s'affranchissant alors de la principale source de déperdition thermique, c'est-à-dire le moteur à combustion. Cette configuration du circuit permet à l'habitacle de monter plus rapidement en température car le débit de fluide dans l'aérotherme est optimisé et la température du fluide à son entrée est de plus en plus chaude ;
- une boucle longue rétablissant la circulation conventionnelle du fluide dans le circuit de refroidissement du moteur à combustion en associant en série le moteur à combustion et l'aérotherme. Cette configuration du circuit permet de communiquer à l'habitacle, à travers l'aérotherme, les calories stockées dans le moteur à combustion ou émises par celui-ci, que le moteur à combustion soit ou non ou ait été en fonctionnement.

Un réchauffeur, par exemple de type résistance électrique ou CTP, placé dans le groupe de climatisation du véhicule en aval de l'aérotherme sur le parcours de l'air en provenance de l'extérieur du véhicule ou en recirculation totale ou partielle de l'habitacle et entrant dans celui-ci, peut si nécessaire compléter ce dispositif si par exemple il n'est pas possible, pour des raisons d'implantation, de disposer d'une résistance électrique ou d'une CTP sur l'eau d'une puissance suffisante.

L'invention a également pour objet un véhicule de type automobile caractérisé en ce qu'il comporte un tel dispositif.

Les avantages, buts et caractéristiques particuliers de ce véhicule étant similaires à ceux du procédé et du dispositif objet de la présente invention, ne sont pas rappelés ici.

L'invention, ses différentes applications, ses avantages, ses buts et ses caractéristiques ressortent plus précisément de la description qui suit et des figures qui l'accompagnent.

### BREVE DESCRIPTION DES FIGURES

Celles-ci ne sont présentées qu'à titre indicatif et nullement limitatif de l'invention. Les figures montrent :
- figure 1 : une représentation schématique d'une première configuration d'un circuit hydraulique d'un dispositif de régulation thermique selon un mode de réalisation de l'invention ;
- figure 2 : une représentation schématique d'une deuxième configuration du circuit selon un mode de réalisation de l'invention ;
- figure 3 : une représentation schématique d'une troisième configuration du circuit selon un mode de réalisation de l'invention ;
- figure 4 : un logigramme fonctionnel de mise en oeuvre d'un procédé de régulation thermique selon un mode de réalisation de l'invention ;

Dans ces figures, les éléments identiques conservent les mêmes références.

### DESCRIPTION DETAILLEE DES FORMES DE REALISATION PREFEREES DE L'INVENTION

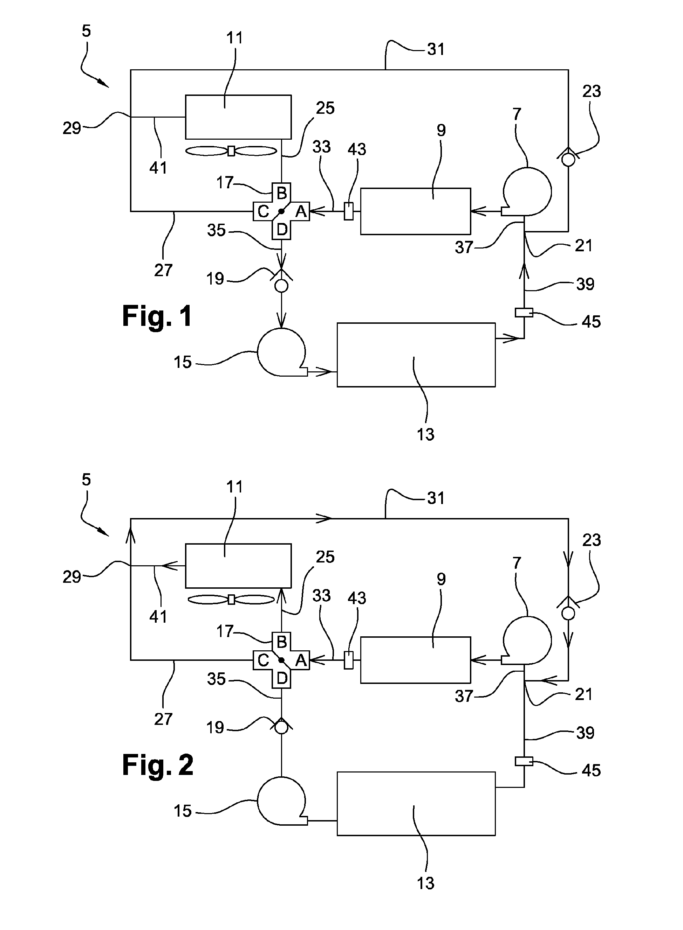

La figure 1 représente, de façon schématique, une première configuration d'un circuit hydraulique fermé 5 d'un dispositif de régulation thermique selon un mode de réalisation de l'invention.

Ledit dispositif est adapté à équiper notamment un véhicule pouvant généralement être connecté à une source d'énergie extérieure ou plus spécifiquement un véhicule de type automobile comportant une batterie haute tension rechargeable et un moteur électrique, un calculateur, une mémoire de données et un capteur de température d'habitacle non représentés, ainsi que le circuit 5.

Le circuit 5 transporte un fluide caloporteur et comporte une pompe électrique à fluide 7, un moyen de régulation thermique 9 dudit fluide, ainsi qu'un échangeur thermique 11 traversé par ledit fluide.

Typiquement, le fluide caloporteur est un liquide de type liquide de refroidissement.

Dans l'exemple, le moyen de régulation thermique 9 est un réchauffeur électrique et l'échangeur thermique 11 est un aérotherme.

Le circuit 5 comporte en outre un moteur à combustion 13 associé à une pompe mécanique à fluide 15, et un capteur de température 45 dudit moteur, ledit moteur et ladite pompe étant traversés par ledit fluide.

Typiquement, le capteur de température 45 du moteur à combustion 13 comporte un capteur de température du fluide et un capteur de température d'huile.

Cette première configuration est adaptée à préconditionner thermiquement, c'est-à-dire à réchauffer, le moteur 13 uniquement. L'énergie électrique utilisée pour préparer le démarrage dudit moteur est alors fournie
- soit par le secteur électrique domestique ou public au moyen d'un chargeur lorsque le véhicule est à l'arrêt et que le moteur 13 est arrêté et froid,
- soit par la batterie lorsque le véhicule est en mode totalement électrique.

Dans les deux cas, la pompe à fluide 15, de type mécanique, est inactive puisqu'elle est adaptée à être entraînée par le moteur à combustion 13. Par contre, la pompe à fluide électrique 7 fonctionne et aspire le fluide pour le refouler dans le réchauffeur.

Typiquement, le réchauffeur 9 est de type électrique et est matérialisé par au moins une résistance CTP ou au moins une bougie.

Dans une première variante, ledit réchauffeur est un brûleur utilisant le carburant du véhicule ou tout autre carburant tel que de l'éthanol par exemple.

Dans une deuxième variante, ledit réchauffeur est un échangeur transférant dans ledit fluide la chaleur récupérée dans les gaz d'échappement, cette variante n'étant possible que lorsque ledit moteur à combustion est en marche.

Dans une troisième variante, ledit réchauffeur est un échangeur transférant dans ledit fluide la chaleur récupérée dans le fluide réfrigérant d'une boucle de climatisation fonctionnant en pompe à chaleur, cette variante n'étant possible qu'en présence d'un compresseur électrique, sauf si le compresseur mécanique conventionnellement attelé audit moteur à combustion peut être entraîné quand ledit moteur est éteint.

Dans une quatrième variante, ledit réchauffeur est une combinaison en série ou en parallèle d'au moins deux des précédentes variantes.

Le circuit 5 comporte en outre
- une vanne 17 présentant au moins deux positions AB/CD et AD/BC et étant disposée à l'intersection de quatre conduits 33, 25, 27 et 35 dudit circuit, le premier conduit 33 étant issu du réchauffeur 9, le deuxième conduit 25 étant issu de l'aérotherme 11, le troisième conduit 27 étant parallèle au deuxième conduit 25, et le quatrième conduit 35 étant issu de la pompe mécanique 15 et comportant un premier clapet anti-retour 19,
- une deuxième intersection 21 de trois conduits 31, 37 et 39, le premier conduit 31 comportant un deuxième clapet anti-retour 23, le deuxième conduit 37 étant issu de la pompe électrique 7, et le troisième conduit 39 étant issu du moteur à combustion 13,
- une troisième intersection 29 de trois conduits 27, 31 et 41, le premier conduit 27 étant celui parallèle à l'aérotherme 11, le deuxième conduit 31 étant celui comportant le deuxième clapet 23, et le troisième conduit 41 étant issu de l'aérotherme 11,
- au moins un capteur de température 43 de fluide positionné entre la pompe électrique 7 et la vanne 17 et préférentiellement à la sortie du réchauffeur 9.

Le fluide est refoulé par la pompe électrique 7 dans le réchauffeur 9 rendu opérationnel et dans lequel il stocke des calories avant de sensibiliser le capteur de température 43 et de pénétrer dans la vanne 17. La vanne 17 est ici réglée dans une position AD/BC selon laquelle le fluide arrive en amont du premier clapet anti-retour 19 qui s'anime sous la pression hydraulique générée par la pompe électrique 7. Plus précisément, pour vaincre la raideur d'un ressort de rappel disposé au sein dudit clapet, le fluide pousse l'obturateur de son siège, ce qui libère le passage vers le moteur à combustion 13. Le fluide traverse alors la pompe à fluide 15 inactive mais passante et l'ensemble du bloc moteur non représenté du moteur 13 pour lui céder les calories préalablement stockées à la traversée du réchauffeur 9. Le fluide, aspiré par la pompe électrique 7, avance jusqu'à l'intersection 21. Le deuxième clapet anti-retour 23, placé à l'aspiration de la pompe électrique 7, voit son obturateur se détacher légèrement de son siège, la dépression exercée par la pompe électrique 7 étant légèrement supérieure à la raideur de son ressort de rappel.

La position AD/BC de la vanne 2 interdit toute circulation de fluide dans le conduit 25 de l'aérotherme 11 ou dans le conduit 27 du circuit 5, lesdits conduits étant parallèles entre elles et se rejoignant par l'intersection 29.

Par conséquent, la légère ouverture du clapet 23 n'entraîne ici aucune circulation de fluide en amont de l'intersection 21 depuis ledit clapet. Le fluide, à l'intersection 21, est donc aspiré par la pompe électrique 7 puis refoulé dans le réchauffeur 9.

Cette première configuration permet donc de dissocier totalement le moteur à combustion 13 de l'aérotherme et de transférer au bloc dudit moteur, via le fluide caloporteur, les calories créées par la mise en action du réchauffeur 9, ce qui a pour effet de
- permettre un démarrage plus rapide dudit moteur et ce avec moins de bruits et de vibrations et une meilleure disponibilité de couple et de régime,
- réduire la pollution et la consommation à l'usage, la mise en action s'effectuant alors avec des températures de matière, notamment celle de la chambre à combustion, et de fluide, notamment d'eau et d'huile, tièdes et supérieures à ce qu'elles auraient été à température ambiante, c'est-à-dire sans préconditionnement thermique,
- améliorer la fiabilité dudit moteur grâce à une sollicitation moindre, en amplitude thermique et en durée, des organes de préchauffage tels que les bougies pour les moteur Diesel et surtout grâce à la réduction des démarrages alors que le moteur est froid et chargé.

Dans une variante, cette première configuration peut être mise en place lorsque le moteur à combustion 13 est à feu et entraîne sa pompe mécanique 15. Dans ce cas, la différence de pression aux bornes de l'obturateur du clapet 19 est accentuée par la dépression exercée par la pompe mécanique 15 puisque ledit clapet est placé en amont, c'est-à-dire à l'aspiration de celle-ci. L'obturateur du clapet 23 est alors plaqué sur son siège par la pression exercée à l'intersection 21 au refoulement de la pompe mécanique 15, supérieure à l'aspiration exercée par la pompe électrique 7 seule, que ne permet pas de vaincre la pression régnant dans le conduit 31 reliant l'intersection 29 et ledit clapet.

Ainsi, la circulation, représentée par des flèches, s'instaure et permet notamment d'accélérer la montée en température du moteur 13 par le transfert à son bloc de calories additionnelles générées au sein du réchauffeur 9.

La figure 2 représente, de façon schématique, une deuxième configuration du circuit 5 selon un mode de réalisation de l'invention.

Cette deuxième configuration est adaptée à préconditionner thermiquement, c'est-à-dire dans le cadre de la présente invention à réchauffer l'habitacle uniquement. L'intérêt de cette configuration est multiple.

En effet, tant que le véhicule est branché sur le secteur électrique extérieur, domestique ou public, l'habitacle est mis et maintenu à une température prédéfinie, ladite température étant considérée comme confortable pour le conducteur, et ce jusqu'à ce que ledit conducteur intègre le véhicule.

Par ailleurs, en phase de roulage électrique, la batterie haute tension de traction n'a plus qu'à maintenir cette température, ce qui réduit fortement l'empreinte énergétique associée au chauffage de l'habitacle et améliore ainsi considérablement la disponibilité et l'autonomie en roulage électrique.

La vanne 17 est ici réglée dans une position AB/CD selon laquelle l'aérotherme 11 est dissocié du reste du circuit 5 et en particulier du bloc moteur. Dans cette configuration, la pompe mécanique 15 est inactive, tout comme le moteur à combustion 13. En revanche, la pompe électrique 7 fonctionne et aspire le fluide se trouvant en amont pour le refouler en aval dans le réchauffeur 9 qui, rendu opérationnel, chauffe ledit fluide qui le traverse. Le fluide sensibilise le capteur de température 43 et entre ensuite dans la vanne 17 qui le dirige vers l'aérotherme. Le fluide traverse ensuite ledit aérotherme et cède, à travers cet échangeur, les calories qu'il transporte au flux d'air venant de l'extérieur ou en recirculation totale ou partielle dans l'habitacle et entrant dans celui-ci au moyen d'un pulseur d'air non représenté.

A la sortie de l'aérotherme 11, au niveau de l'intersection 29, le fluide n'emprunte pas le conduit 27 vers la vanne 17 car
- d'une part, le clapet 19 est fermé, l'obturateur est plaqué contre son siège par le ressort de rappel et, la pression du fluide en amont dudit clapet et la dépression exercée par la pompe électrique 7 en aval sont insuffisantes pour vaincre la raideur du ressort, ces pression et dépression étant respectivement amputées d'une perte de charge de l'aérotherme 11 et du bloc moteur qui s'ajoutent à celle des conduits ;
- d'autre part, l'équilibre, au niveau du clapet 23, entre la dépression exercée en aval de l'obturateur par la pompe électrique 7 et la pression exercée en amont par le fluide en sortie de l'aérotherme 11, lesdites pression et dépression s'exerçant dans le même sens sur l'obturateur, le fait se mouvoir, la raideur du ressort étant vaincue.

Le fluide en sortie de l'aérotherme 11, au niveau de l'intersection 29, emprunte donc le conduit 31, puis traverse le clapet 23 et parvient à l'intersection 21 où il est à nouveau aspiré par la pompe électrique 7 et refoulé dans le réchauffeur 9.

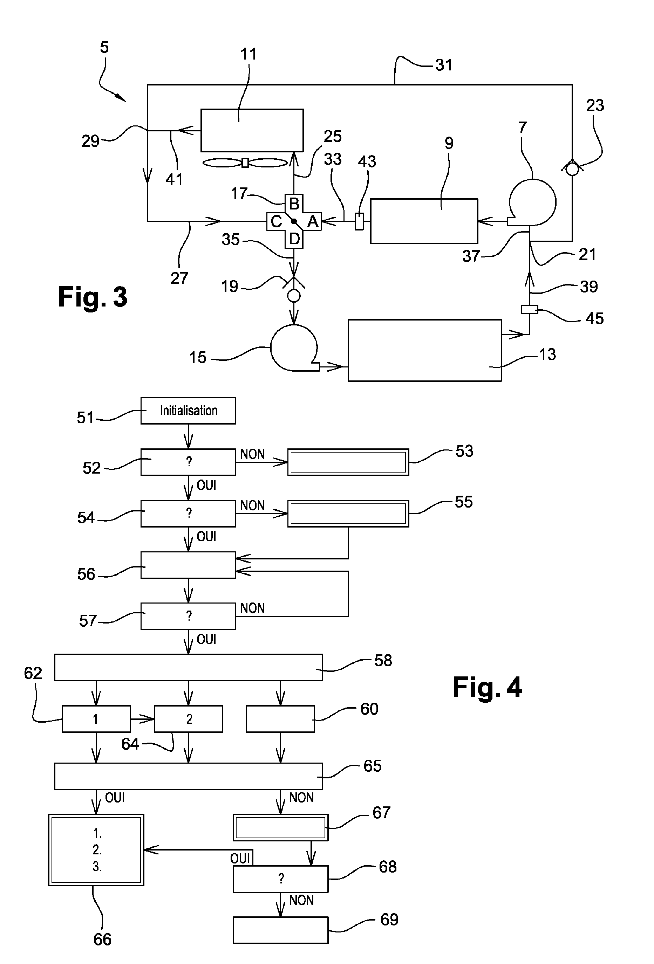

La figure 3 représente, de façon schématique, une troisième configuration du circuit selon un mode de réalisation de l'invention.

Cette troisième configuration est adaptée à rétablir une circulation conventionnelle du fluide en série notamment dans l'aérotherme 11 et le moteur 13 pour récupérer les calories émises par ou stockées dans ledit moteur, qu'il soit à feu ou non, afin de chauffer l'habitacle ou alors pour préconditionner thermiquement ledit moteur et ledit habitacle simultanément.

Dans cette configuration, quatre états du circuit 5 sont possibles selon l'activité des pompes 7 et 15 :
- lorsque lesdites pompes sont arrêtées, il n'y a aucune circulation de fluide et les clapets 19 et 23 sont fermés, les obturateurs étant plaqués sur leurs sièges par leurs ressorts de rappel respectifs ; cet état constituant l'état de repos du système ;
- lorsque la pompe mécanique 15 est arrêtée et que la pompe électrique 7 est active, le circuit adopte la deuxième configuration ;
- lorsque la pompe mécanique 15 est active et l'autre non ;
- lorsque lesdites pompes sont toutes les deux actives.

Le clapet 19 placé à l'aspiration de la pompe mécanique à fluide 15 du moteur 13 actif s'ouvre sous l'effet de la dépression qu'elle crée en aval dudit clapet et libère le passage du fluide vers la pompe mécanique 15 qui l'aspire et le refoule en aval dans le bloc moteur. Le fluide traverse le bloc moteur et en prélève des calories puis parvient à l'intersection 21 à une pression communiquée par ladite pompe qui, malgré qu'elle soit amputée de la perte de charge dudit bloc moteur, reste suffisamment élevée pour plaquer l'obturateur du clapet 23 contre son siège, ce qui condamne le conduit 31.

Le fluide emprunte donc ensuite la pompe électrique 7 alors inactive mais passante puis le réchauffeur, qu'il soit actif ou non, et enfin le capteur de température 43 et la vanne 17 qui, par son réglage en position AB, le dirige vers l'aérotherme 11. Le fluide, en traversant ledit aérotherme, cède lesdites calories au flux d'air venant de l'extérieur ou en recirculation partielle ou totale dans l'habitacle et entrant dans celui-ci grâce au pulseur d'air. A la sortie de l'aérotherme, à l'intersection 29, le fluide ne peut pas emprunter le conduit 31 car le clapet 23 est fermé. Par conséquent, le fluide emprunte le conduit 27 puis ladite vanne 17 par son passage CD et traverse le clapet 19 ouvert par l'aspiration de la pompe mécanique 15. Le fluide est alors aspiré par ladite pompe mécanique 15 en amont de celle-ci, et elle le refoule en aval, dans le bloc moteur 13 alors refroidi par le liquide qui en prélève les calories.

La mise en action de la pompe électrique 7 ne change pas la configuration du circuit 5 dernièrement décrite. En effet, la dépression créée au niveau de l'obturateur du clapet 23 par l'aspiration de ladite pompe électrique 7 désormais active, est, en valeur absolue, inférieure à la poussée exercée sur ledit obturateur 23 contre son siège par ledit fluide refoulé du bloc moteur 13 par la pompe mécanique 15, ce qui maintient le clapet 23 fermé.

Typiquement, le capteur de température 43 de fluide, de type thermomètre, thermocouple ou résistance à coefficient de température négatif (CTN), est intégré à la partie du circuit 5 commune aux trois configurations précédemment décrites, c'est-à-dire entre la pompe électrique 7 et la vanne 17 afin de pouvoir piloter le circuit hydraulique suivant la deuxième configuration en fonction de la mesure de température de fluide et d'autoriser les transitions vers les autres états du dispositif. Ce capteur 43 peut être séparé ou intégré à l'un des composants de cette partie commune et placé préférentiellement après le réchauffeur 9, par exemple à sa sortie ou en entrée A de la vanne 17.

Dans une variante, un capteur de température de fluide supplémentaire est intégré au circuit 5, par exemple au sein des clapets 19 et 23.

Dans une variante, le réchauffeur intègre aussi la pompe électrique.

Selon l'invention, le réchauffeur 9 est piloté en fonction de la température de fluide en sortie du moteur 13, de celle en sortie du réchauffeur 9, de celle de l'huile de lubrification du moteur thermique 13, de celle de l'habitacle, de la température extérieure et du niveau de confort souhaité dans l'habitacle. La température de fluide en sortie du moteur 13 et celle de son huile de lubrification permettent de savoir à quel point ledit moteur nécessite d'être préconditionné thermiquement ou si, au contraire, à quel point les calories qui y sont présentes peuvent assurer le chauffage de l'habitacle, à déterminer selon les températures de l'habitacle et de l'ambiante extérieure selon le niveau de confort souhaité dans l'habitacle. La température en sortie du réchauffeur 9 est la seule information disponible lorsque le circuit de fluide 5 est configuré en boucle courte selon la figure 2.

Dans une variante, lors du basculement d'une configuration à l'autre, la pompe électrique 7 et/ou le réchauffeur 9 restent actifs pour augmenter le débit de l'aérotherme s'il est insuffisant et/ou pour continuer à chauffer le fluide en entrée de l'aérotherme afin d'éviter un rafraîchissement brutal dommageable par l'arrivée en entrée de l'aérotherme du fluide plus froid issu du moteur, lors dudit basculement.

La vanne 17 peut être de type électrovanne par solénoïde et translation d'un obturateur, mais plus préférentiellement elle consiste en une partie mobile mise en rotation par un petit moteur électrique, par exemple de type à moteur continu, dans un corps dans lequel sont pratiqués des conduits par lesquels s'écoule le fluide selon la configuration AB/CD ou AD/BC prise par la vanne 17.

La transition entre ces configurations s'effectue contre un ressort de rappel permettant, lors d'une défaillance de la vanne 17, de la ramener dans sa position de repos AB/CD rétablissant la configuration conventionnelle du circuit de fluide 5 selon la figure 3. Néanmoins, cette variante nécessite un moteur électrique plus puissant pour vaincre le couple résistif généré par le ressort de rappel quand la vanne 17 prend la configuration AD/BC et plus volumineux pour en assurer le refroidissement du bobinage. Il s'ensuit une consommation de courant importante afin de maintenir la vanne 17 dans cette configuration AD/BC.

En variante, la vanne 17 présente deux positions stables constituées des configurations AB/CD et AD/BC, la transition entre ces positions s'effectuant en inversant la polarité de la commande soit directement par le calculateur, soit par une électronique intégrée à la vanne 17 alors également munie d'un capteur de position. Cette variante permet de s'affranchir d'une consommation de courant inutile pour maintenir la vanne 17 positionnée dans l'état AD/BC et de recourir à un moteur électrique de volume restreint.

Enfin, l'agencement de la partie mobile de la vanne 17 dans le corps permet de s'affranchir de toute surpression de fluide dans le circuit hydraulique 5 pouvant être générée par les positions intermédiaires prises par la partie mobile lors de sa rotation dans le corps de la vanne 17 ou lors d'un éventuel grippage de la partie mobile dans le corps. Cet agencement peut s'effectuer en concevant judicieusement le recouvrement des conduits, pratiqués dans le corps de la vanne 17, par la partie mobile, en laissant toujours s'écouler le fluide en entrée et en sortie de la vanne 17.

En variante, toute surpression dans le circuit de fluide 5 est évitée par le pilotage de la vanne 17 en interdisant certains angles de rotation de la partie mobile dans le corps, selon le débit de fluide débité par la pompe mécanique 15 et/ou la pompe électrique 7. Ce dispositif est intégré soit à l'électronique de la vanne 17, soit au calculateur qui pilote le système décrit dans la présente invention.

La figure 4 montre un logigramme fonctionnel de mise en oeuvre d'un procédé de régulation thermique selon un mode de réalisation de l'invention.

Ledit procédé comporte des étapes dans lesquelles
- on initialise 51 le dispositif selon l'invention,
- on vérifie 52 que le véhicule est branché à la source extérieure d'énergie, par exemple sur le secteur électrique.

Si ledit véhicule n'y est pas branché, aucune recharge de batterie et aucun préconditionnement thermique de l'habitacle ni du moteur à combustion, ne sont possibles. En variante, seul le préconditionnement thermique du moteur à combustion est réalisé, s'il s'avère nécessaire de le faire à des fins sécuritaires pour garantir son démarrage rapide pour par exemple assurer un dépassement. On mesure 53 un niveau de charge de la batterie, une température extérieure, des températures d'huile et de fluide du moteur à combustion pour savoir si l'on peut ou non préconditionner thermiquement ledit moteur, c'est-à-dire préparer sa mise en action avant le roulage ou en cours de roulage en tout électrique, mais ce au détriment de l'autonomie de ladite batterie.

Si ledit véhicule est branché, on vérifie 54 que le conducteur a programmé une heure de départ.

Si ce n'est pas le cas, afin de ne pas consommer de l'énergie sur la source extérieure indéfiniment et inutilement, on prévoit 55 une heure probable de départ en fonction de la date de mise en oeuvre dudit procédé et de programmations éventuellement effectuées dans un passé proche pour une journée et/ou une période semblable.

Ledit procédé comporte des étapes supplémentaires dans lesquelles, ensuite,
- la priorité étant donnée à la mobilité du véhicule en tout électrique sans dans un premier temps recourir au moteur à combustion, on recharge 56 la batterie depuis la source extérieure d'énergie, par exemple sur le secteur électrique, puis
- on mesure 57 la charge de ladite batterie, et
- tant que la batterie n'est pas totalement chargée, on continue à la recharger.
- lorsque la batterie est totalement chargée,
   - on prédéfinit 58 au moins une température de moteur et une température d'habitacle optimales,
   - on mesure 58 un niveau une température extérieure, une température d'habitacle, des températures d'huile et de fluide du moteur à combustion et une commande de température d'habitacle actionnée par le conducteur pour estimer des besoins de préconditionnement thermique. Afin de réaliser ces mesures, le pulseur d'air habitacle et la pompe à fluide électrique 7 sont préférentiellement préalablement mis en action pendant un temps prédéfini, respectivement une à deux minutes et trente secondes à une minute, afin de rafraîchir les informations lues par les capteurs de température d'air habitacle et de fluide moteur.

L'estimation 58 des besoins de préconditionnement thermique consiste à calculer une durée de régulation nécessaire et à déterminer une heure de démarrage du pilotage du circuit hydraulique et des organes électriques associés.

S'il faut préconditionner thermiquement le moteur à combustion, on pilote 62 le circuit hydraulique à partir de l'heure déterminée, suivant la première configuration décrite avec la figure 1, et jusqu'à ce que la température dudit moteur soit sensiblement égale à une température prédéfinie.

Selon un mode préféré de réalisation de l'invention, on préconditionne 62 ledit moteur jusqu'à ce que
- la température du fluide en sortie du moteur à combustion soit supérieure ou égale à 40°C et la température de l'huile soit supérieure à 30°C, ou
- la durée de régulation nécessaire calculée soit dépassée.

Si ce n'est pas nécessaire, on s'occupe de l'habitacle.

A la place de, après ou pendant le préconditionnement dudit moteur, s'il faut préconditionner thermiquement l'habitacle en mode chauffage, on pilote 64 le circuit hydraulique, suivant la deuxième configuration décrite avec la figure 2, jusqu'à ce que la température d'habitacle soit sensiblement égale à une température prédéfinie.

Selon un mode préféré de réalisation de l'invention, on prédéfinit ladite température en fonction d'une commande de température d'habitacle actionnée par le conducteur et/ou d'une mesure 58 de température extérieure.

S'il n'est nécessaire de préconditionner ni ledit moteur, ni ledit habitacle, on met en sommeil 60 ledit véhicule jusqu'à l'heure prévue 55 d'arrivée du client.

Ledit procédé comporte des étapes supplémentaires dans lesquelles, ensuite,
- on compare 65 l'heure réelle d'arrivée du conducteur avec l'heure prévue 55, et
- lorsque le véhicule part avant ou à l'heure prévue, on utilise 66 l'énergie électrique de la batterie pour piloter le circuit hydraulique et les organes électriques associés jusqu'à ce que la batterie atteigne un niveau de charge prédéterminé à partir duquel on démarre le moteur à combustion,
- lorsque, à l'heure prévue, le véhicule n'est toujours pas parti, on maintient 67 ledit pilotage pendant une durée prédéfinie à la fin de laquelle
   - lorsque le véhicule est parti, on utilise 66 l'énergie électrique de la batterie pour piloter le circuit hydraulique et les organes électriques associés jusqu'à ce que la batterie atteigne ledit niveau de charge,
   - lorsque le véhicule n'est pas parti, on arrête (69) ladite régulation.

Lorsque le véhicule est parti, on pilote 66 le circuit hydraulique notamment en fonction de la commande de température d'habitacle actionnée par le conducteur et/ou de la mesure de température extérieure.

Dans un premier temps, en fonction des informations évoquées ci-avant et des températures des fluides du moteur à combustion, s'il faut maintenir dans l'habitacle l'ambiante thermique en chauffage générée pendant son préconditionnement thermique 64, on pilote le circuit hydraulique 5 suivant la configuration décrite en figure 2 jusqu'à ce que l'état de charge de la batterie nécessite le démarrage du moteur à combustion.

Préférentiellement, en ayant préalablement suffisamment réchauffé le fluide caloporteur du moteur à combustion lors de son préconditionnement thermique 62, par exemple jusqu'à une température de fluide de 40 à 60°C selon la configuration décrite en figure 1 du circuit hydraulique 5, il est judicieux d'utiliser en boucle longue, suivant la configuration décrite en figure 3 du circuit hydraulique 5, les calories stockées dans le bloc moteur afin de réchauffer l'habitacle. L'inertie thermique du circuit ainsi formé et en particulier celle du moteur à combustion et les calories stockées dans ce circuit permettent alors de contribuer au maintien du confort thermique dans l'habitacle en réduisant pour ce faire le recours aux organes électriques (CTP sur le fluide et sur l'air), d'où il résulte une plus faible réduction de l'autonomie du véhicule en mode tout électrique due au confort thermique dans l'habitacle.

En fonction de l'état de charge de la batterie, à l'approche du moment où il sera nécessaire de démarrer le moteur thermique, il est judicieux, selon la température extérieure et la température des fluides du moteur à combustion, de préparer sa mise en action et son démarrage en activant, s'il s'agit d'un moteur à combustion Diesel, ses bougies de préchauffage, un premier temps prédéterminé avant son démarrage effectif et si nécessaire un second temps prédéterminé après son démarrage effectif et/ou en pilotant le circuit hydraulique 5 selon les figures 1 ou 3 en utilisant éventuellement les CTP sur l'air pour maintenir le confort thermique désiré dans l'habitacle.

Le démarrage du moteur à combustion s'effectue tout en pilotant le circuit hydraulique 5 selon l'une ou/puis l'autre des configurations décrites par les figures 1 et 3 selon qu'il faille privilégier :
- l'atteinte plus rapide des conditions optimales de fonctionnement du moteur à combustion, auquel cas la configuration du circuit 5 selon la figure 1 est adoptée, le chauffage de l'habitacle étant alors et si nécessaire maintenu par la mise en oeuvre du réchauffeur électrique sur l'air entrant dans l'habitacle,
- ou le chauffage de l'habitacle, en adoptant la configuration du circuit 5 selon la figure 3, par les calories dégagées dans le fluide caloporteur par le moteur à combustion ou pour garantir la fiabilité du moteur thermique en rétablissant la configuration conventionnelle du circuit hydraulique 5.

Les paragraphes suivants décrivent des variantes dans le procédé de régulation thermique et dans le dispositif associé.

Dans une première variante, les clapets 23 et 19 sont intégrés en un seul composant placé à l'intersection 29, ledit composant étant de type distributeur pressostatique. Ledit distributeur est adapté à gérer l'orientation du fluide en sortie de l'aérotherme 11 en fonction des différentes configurations. Ce distributeur est alors constitué
- soit d'un seul obturateur condamnant de manière sélective le passage par les conduits 27 et 31 en fonction de la différence de pression exercée, aux bornes dudit obturateur, par la mise en oeuvre simultanée ou séquentielle des pompes électrique 7 et mécanique 15, et se mouvant dans un corps hydraulique, contre deux ressorts de rappel placés de part et d'autre dudit obturateur et dont les raideurs sont adaptées à la dépression exercée en aval par chaque pompe et à la pression exercée en amont par le fluide ;
- soit par une réunion, dans un même corps, de deux obturateurs et de leurs ressorts respectifs.

Typiquement, lorsque les préconditionnements thermiques du moteur 13 et de l'habitacle sont pilotés l'un après l'autre, en première et deuxième configurations, suivant la puissance thermique disponible au niveau du réchauffeur 9, la puissance hydraulique de la pompe 7 et la température extérieure, la durée de préconditionnement varie de vingt à quarante-cinq minutes pour ledit moteur et est d'environ trente minutes pour l'habitacle, soit un total d'environ une heure.

Lorsque lesdits préconditionnements sont réalisés simultanément, en troisième configuration, la durée nécessaire varie entre une heure et une heure et demie.

Dans une deuxième variante, on réalise simultanément les première et deuxième configurations, c'est-à-dire qu'on pilote deux circuits séparés, ce qui réduit la durée totale de préconditionnement à trente ou quarante, soit une diminution de moitié. Cependant, cette dernière variante nécessite une implantation, sur le conduit 27, d'une seconde pompe électrique et d'un second réchauffeur, préférentiellement de type électrique, ce qui augmente les coûts et les difficultés d'implantation.

Dans une troisième variante, la pompe à fluide du moteur 13 est électrique, ce qui représente un bénéfice, connu de l'homme du métier, pour le dit moteur. Néanmoins, cette dernière variante ne permet pas de s'affranchir de la pompe électrique 7 sur le circuit 5 en amont de la vanne 17 car, sans ladite pompe, la régulation thermique de l'habitacle seul est difficile car elle nécessite d'implanter la pompe à fluide électrique du moteur 13 dissociée dudit moteur et de court-circuiter ledit moteur, ce qui nécessite de prévoir un conduit supplémentaire à piloter avec une vanne pour rétablir la communication avec ledit moteur lorsque cela est nécessaire.

Typiquement, l'huile du moteur 13 est inanimée lorsque ledit ne fonctionne pas, que la pompe à huile n'est pas entraînée et qu'elle n'est pas électrique.

Dans une quatrième variante, lorsque le véhicule est branché au secteur électrique, l'échange thermique avec l'huile moteur inanimée est amélioré en fournissant de l'énergie électrique à une machine électrique, de type alterno-démarreur par exemple, accouplée au moteur thermique. La rotation de ladite machine à un faible régime, de sorte à ne pas endommager l'attelage mobile dudit moteur, permet d'actionner les pièces mobiles, telles que le vilebrequin, les pistons, les bielles et les soupapes notamment, dudit moteur sans que ce dernier ne soit à feu et ainsi de brasser le volume d'huile stagnant dans son bac. On répartit ainsi l'huile réchauffée dans un plus grand volume d'huile en atteignant les principaux postes de couples résistifs au démarrage du moteur 13 tels que l'interface entre pistons, segments et chemises, arbre à cames et soupapes notamment. Pour des raisons de sécurité, les roues avant et/ou arrière sont dissociées des organes de la chaîne de traction, les transmissions avant et arrière bloquées ou désaccouplées de la chaîne de la traction et le frein de parking serré, afin d'éviter tout mouvement dudit véhicule.

Dans une cinquième variante, pour établir plus rapidement les conditions thermodynamiques propices dans la chambre de combustion, on réchauffe l'air admis dans les cylindres au moyen, par exemple, d'un échangeur air/eau implanté sur le circuit d'admission d'air en amont de ladite chambre et alimenté par le liquide de refroidissement. On peut par exemple utiliser un Radiateur d'Air de Suralimentation (RAS) air/eau dont la fonction ici décrite de réchauffer l'air admis dans la chambre de combustion est mutualisée avec celle, conventionnelle, de refroidir l'air d'admission, ou un échangeur supplémentaire implanté par exemple dans le filtre à air.

Dans une variante, on implante un réchauffeur électrique directement dans le circuit d'admission d'air afin de ne pas contraindre excessivement la fiabilité des bougies de préchauffage. Pour être efficace afin de limiter les déperditions thermiques, cet échangeur est implanté au plus près de l'admission, ce qui est souvent contraignant. Pour s'affranchir de cette contrainte, on entraîne le moteur à combustion par la machine électrique qui lui est accouplée afin d'actionner les soupapes d'admission et d'échappement et les pistons et, ainsi, aspirer de l'air extérieur dans la chambre de combustion grâce à la dépression créée par la descente du piston. Cet air, en traversant l'échangeur air/eau ou le réchauffeur électrique, se réchauffe et contribue à chauffer, de l'intérieur, ladite chambre.

En variante, un turbocompresseur électrique ou à assistance électrique permet de forcer ce débit d'air et d'augmenter la densité de l'air admis, afin d'améliorer ce processus de réchauffage de la chambre de combustion.

Dans une sixième variante, un réchauffeur préférentiellement de type électrique ou échangeur avec le liquide de refroidissement, est disposé dans le conduit de blow-by, afin de s'affranchir de tout risque de gel des condensats quand les conditions de fonctionnement du moteur à combustion et les conditions atmosphériques extérieures telles que la température, l'hygrométrie, ..., y sont propices.

## Revendications

1. Procédé de régulation thermique, pour un véhicule de type automobile, ladite régulation étant assurée par un fluide caloporteur parcourant un circuit hydraulique fermé (5) comprenant
- une pompe électrique (7) à fluide,
- un moyen de régulation thermique (9) dudit fluide,
- un échangeur thermique (11) traversé par ledit fluide,
ledit procédé comportant des étapes dans lesquelles
- on mesure (58) une température d'habitacle,
**caractérisé en ce que**
- on compare (58) la température d'habitacle à une première température prédéfinie et,
- lorsque lesdites températures sont différentes, on pilote (64 ; 66 ; 67) ledit circuit jusqu'à ce que lesdites températures soient sensiblement égales ;
- on recharge (56) la batterie en la branchant à une source d'énergie électrique extérieure,
- on mesure (57 ; 66) la charge de ladite batterie, et
- lorsque la batterie est totalement chargée, on utilise l'énergie électrique de ladite source extérieure pour piloter le circuit hydraulique ;
- on prévoit (55) une heure de départ du véhicule,
- on calcule (58) une durée de nécessaire pour réguler thermiquement le moteur thermique et/ou l'habitacle,
- on détermine (58) une heure de démarrage du pilotage du circuit hydraulique,
- on démarre (60 ; 62 ; 64) ledit pilotage à l'heure déterminée,
- on compare (65) l'heure réelle d'arrivée du conducteur avec l'heure prévue, et
- lorsque le véhicule part avant ou à l'heure prévue, on utilise (66) l'énergie électrique de la batterie pour piloter le circuit hydraulique jusqu'à ce que la batterie atteigne un niveau de charge prédéterminé à partir duquel on démarre le moteur à combustion,
- lorsque, à l'heure prévue, le véhicule n'est toujours pas parti, on maintient (67) ledit pilotage pendant une durée prédéfinie à la fin de laquelle
- lorsque le véhicule est parti, on utilise (66) l'énergie électrique de la batterie pour piloter le circuit hydraulique jusqu'à ce que la batterie atteigne ledit niveau de charge,
- lorsque le véhicule n'est pas parti, on arrête (69) ladite régulation.

2. Procédé selon la revendication 1, **caractérisé en ce que**
- on détermine (58) une température d'un moteur à combustion (13) associé à une pompe (15) à fluide, ledit moteur et ladite pompe faisant partie du circuit hydraulique et étant traversés par ledit fluide,
- on compare (58) la température dudit moteur à une deuxième température prédéfinie et,
- lorsque lesdites températures sont différentes, on pilote (62 ; 66 ; 67) ledit circuit hydraulique jusqu'à ce que lesdites températures soient sensiblement égales.

3. Procédé selon la revendication 1 ou 2, **caractérisé en ce que**, lorsque le véhicule est parti, on pilote (66) le circuit hydraulique notamment en fonction d'une commande de température d'habitacle actionnée par le conducteur, d'une mesure (58) de température du moteur thermique, de température habitacle et/ou d'une mesure (58) de température extérieure.

4. Procédé selon l'une des revendications 1 à 3, **caractérisé en ce que**
- pour déterminer (58) la température du moteur à combustion, on mesure (58) une température du fluide à la sortie dudit moteur et une température d'huile,
- on régule (62) ledit moteur jusqu'à ce que
- la température du fluide soit supérieure ou égale à 40°C et la température de l'huile soit supérieure à 30°C, ou
- la durée de régulation nécessaire calculée soit dépassée.

5. Dispositif de régulation thermique, pour un véhicule de type automobile comportant une batterie rechargeable, un calculateur, un moteur électrique et un capteur de température d'habitacle, comprenant un circuit hydraulique fermé (5) transportant un fluide caloporteur, ledit circuit comprenant
- une pompe électrique (7) à fluide,
- un moyen de régulation thermique (9) dudit fluide,
- un échangeur thermique (11) traversé par ledit fluide,
**caractérisé en ce que**
- le calculateur est adapté à comparer la température d'habitacle à une première température prédéfinie et, lorsque lesdites températures sont différentes, à piloter (64 ; 66 ; 67) ledit circuit jusqu'à ce que lesdites températures soient sensiblement égales ;
- le circuit hydraulique comporte en outre un moteur à combustion (13) associé à une pompe mécanique (15) à fluide, et au moins un capteur de température (45) dudit moteur, ledit moteur et ladite pompe étant traversés par ledit fluide,
- le calculateur est adapté à comparer la température dudit moteur à une deuxième température prédéfinie et, lorsque lesdites températures sont différentes, à piloter (62 ; 66 ; 67) ledit circuit hydraulique jusqu'à ce que lesdites températures soient sensiblement égales ;
le dispositif étant en outre **caractérisé en ce que**
- il comporte en outre un capteur de température extérieure,
- le moyen de régulation est un réchauffeur,
- l'échangeur est un aérotherme,
- le fluide est un liquide de type liquide de refroidissement,
- le capteur de température du moteur à combustion comporte un capteur de température du liquide et un capteur de température d'huile,
- le circuit comporte en outre
- une vanne (17) présentant au moins deux positions (AB/CD ; AD/BC) et étant disposée à l'intersection de quatre conduits (33 ; 25 ; 27 ; 35) dudit circuit, le premier conduit (33) étant issu du réchauffeur, le deuxième conduit (25) étant issu de l'aérotherme, le troisième conduit (27) étant parallèle au deuxième conduit, et le quatrième conduit (35) étant issu de la pompe mécanique et comportant un premier clapet anti-retour (19),
- une deuxième intersection (21) de trois conduits (31 ; 37 ; 39), le premier conduit (31) comportant un deuxième clapet anti-retour (23), le deuxième conduit (37) étant issu de la pompe électrique, et le troisième conduit (39) étant issu du moteur à combustion,
- une troisième intersection (29) de trois conduits (27 ; 31 ; 41), le premier conduit (27) étant celui parallèle à l'aérotherme, le deuxième conduit (31) étant celui comportant le deuxième clapet, et le troisième conduit (41) étant issu de l'aérotherme,
- au moins un capteur de température (43) de fluide positionné entre la pompe électrique et la vanne, préférentiellement en sortie du réchauffeur.

6. Véhicule de type automobile **caractérisé en ce qu'**il comporte un dispositif selon la revendication 5.

## Patentansprüche

1. Verfahren zur thermischen Regelung für ein Fahrzeug des Typs Kraftfahrzeug, wobei die Regelung von einem Wärmeträgerfluid, das einen geschlossenen hydraulischen Kreislauf (5) durchläuft, sichergestellt ist, das Folgendes umfasst
- eine Fluidelektropumpe (7),
- ein Mittel (9) zur thermischen Regulierung des Fluids,
- einen Wärmeaustauscher (11), der von dem Fluid durchquert wird,
wobei das Verfahren Schritte aufweist, bei welchen
- eine Fahrzeuginnenraumtemperatur (58) gemessen wird,
**dadurch gekennzeichnet, dass**
- die Fahrzeuginnenraumtemperatur mit einer ersten vordefinierten Temperatur verglichen (58) wird und
- wenn die Temperaturen unterschiedlich sind, der Kreislauf gesteuert wird (64; 66; 67), bis die Temperaturen im Wesentlichen gleich sind,
- der Akkumulator aufgeladen wird (56), indem er an eine externe Stromquelle angeschlossen wird,
- die Ladung des Akkumulators gemessen wird (57; 66), und
- wenn der Akkumulator vollständig aufgeladen ist, der Strom der externen Quelle verwendet wird, um den hydraulischen Kreislauf zu steuern,
- eine Abfahrtuhrzeit des Fahrzeugs vorgesehen wird (55),
- eine Dauer berechnet wird (58), die erforderlich ist, um die Brennkraftmaschine und/oder den Fahrzeuginnenraum thermisch zu regulieren,
- eine Zeit des Startens des Steuerns des hydraulischen Kreislaufs bestimmt wird (58),
- das Steuern zu der festgelegten Uhrzeit gestartet wird (60; 62; 64),
- die tatsächliche Ankunftsuhrzeit des Fahrers mit der vorgesehenen Uhrzeit verglichen wird (65), und
- wenn das Fahrzeug vor oder zu der vorgesehenen Uhrzeit abfährt, man den Strom des Akkumulators verwendet (66), um den hydraulischen Kreislauf zu steuern, bis der Akkumulator ein vorbestimmtes Ladeniveau erreicht, ab welchem die Brennkraftmaschine gestartet wird,
- wenn das Fahrzeug zur vorgesehenen Uhrzeit immer noch nicht abgefahren ist, das Steuern während vorbestimmten Dauer aufrechterhalten wird (67), an deren Ende
- wenn das Fahrzeug abgefahren ist, der Strom des Akkumulators verwendet wird (66), um den hydraulischen Kreislauf zu steuern, bis der Akkumulator das Ladeniveau erreicht,
- wenn das Fahrzeug nicht abgefahren ist, man die Regulierung stoppt (69).

2. Verfahren nach Anspruch 1, **dadurch gekennzeichnet, dass**
- eine Temperatur einer Brennkraftmaschine (13) bestimmt wird (58), die mit einer Fluidpumpe (15) assoziiert ist, wobei die Maschine und die Pumpe zu dem hydraulischen Kreislauf gehören und von dem Fluid durchquert werden,
- die Temperatur der Maschine mit einer zweiten vorbestimmten Temperatur verglichen wird (58), und
- wenn die Temperaturen unterschiedlich sind, der hydraulische Kreislauf gesteuert wird (62; 66; 67), bis die Temperaturen im Wesentlichen gleich sind.

3. Verfahren nach Anspruch 1 oder 2, **dadurch gekennzeichnet, dass**, wenn das Fahrzeug abgefahren ist, der hydraulische Kreislauf insbesondere in Abhängigkeit von einer Fahrzeuginnenraum-Temperatursteuerung, die von dem Fahrer betätigt wird, von einer Temperaturmessung (58) der Brennkraftmaschine, von der Fahrzeuginnenraumtemperatur und/oder einer Außentemperaturmessung (58) gesteuert wird (66).

4. Verfahren nach einem der Ansprüche 1 bis 3, **dadurch gekennzeichnet, dass**
- zum Bestimmen (58) der Temperatur der Brennkraftmaschine eine Temperatur des Fluids an dem Ausgang der Maschine und eine Öltemperatur gemessen werden (58),
- der Motor reguliert wird (62), bis
- die Temperatur des Fluids größer oder gleich 40 °C ist und die Öltemperatur größer als 30 °C ist, oder
- die berechnete erforderliche Regulierungsdauer überschritten wird.

5. Vorrichtung zur thermischen Regulierung für ein Fahrzeug des Typs Kraftfahrzeug, das einen aufladbaren Akkumulator, einen Rechner, einen Elektromotor und einen Fahrgastinnenraum-Temperaturfühler umfasst, das einen geschlossenen hydraulischen Kreislauf (5) umfasst, der ein Wärmeträgerfluid transportiert, wobei der Kreislauf Folgendes umfasst
- eine Fluidelektropumpe (7),
- ein Mittel (9) zur thermischen Regulierung des Fluids,
- einen Wärmeaustauscher (11), der von dem Fluid durchquert wird,
**dadurch gekennzeichnet, dass**
- der Rechner angepasst ist, um die Fahrgastinnenraumtemperatur mit einer ersten vordefinierten Temperatur zu vergleichen, und, wenn die Temperaturen unterschiedlich sind, den Kreislauf zu steuern (64; 66; 67), bis die Temperaturen im Wesentlichen gleich sind,
- der hydraulische Kreislauf außerdem eine Brennkraftmaschine (13) umfasst, die mit einer mechanischen Fluidpumpe (15) assoziiert ist, und mindestens einen Temperaturfühler (45) der Maschine, wobei die Maschine und die Pumpe von dem Fluid durchquert sind,
- der Rechner angepasst ist, die Temperatur der Maschine mit einer zweiten vordefinierten Temperatur zu vergleichen, und, wenn die Temperaturen unterschiedlich ist, den hydraulischen Kreislauf zu steuern (62; 66; 67), bis die Temperaturen im Wesentlichen gleich sind,
wobei die Vorrichtung außerdem **dadurch gekennzeichnet ist, dass**
- sie außerdem einen externen Temperaturfühler umfasst,
- das Reguliermittel ein Erhitzer ist,
- der Wärmeaustauscher ein Lufterhitzer ist,
- das Fluid eine Flüssigkeit des Typs Kühlerflüssigkeit ist,
- der Temperaturfühler der Brennkraftmaschine einen Temperaturfühler der Flüssigkeit und einen Öltemperaturfühler umfasst,
- der Kreislauf außerdem Folgendes umfasst
- einen Schieber (17), der mindestens zwei Positionen aufweist (AB/CD; AD/BC) und an der Schnittstelle zu vier Leitungen (33; 25; 27; 35) des Kreislaufs angeordnet ist, wobei die erste Leitung (33) aus dem Erhitzer stammt, die zweite Leitung (25) aus dem Lufterhitzer stammt, die dritte Leitung (27) zu der zweiten Leitung parallel ist, und die vierte Leitung (35) aus der mechanischen Pumpe stammt und ein erstes Rückschlagventil (19) umfasst,
- eine zweite Schnittstelle (21) zu drei Leitungen (31; 37; 39), wobei die erste Leitung (31) ein zweites Rückschlagventil (23) umfasst, die zweite Leitung (37) aus der Elektropumpe stammt, und die dritte Leitung (39) aus der Brennkraftmaschine stammt,
- eine dritte Schnittstelle (29) zu drei Leitungen (27; 31; 41), wobei die erste Leitung (31) diejenige ist, die das zweite Ventil umfasst und die dritte Leitung (41) aus dem Lufterhitzer stammt,
- mindestens einen Fluidtemperaturfühler (43), der zwischen der Elektropumpe und dem Schieber positioniert ist, vorzugsweise am Ausgang des Erhitzers.

6. Fahrzeug des Typs Kraftfahrzeug, **dadurch gekennzeichnet, dass** es eine Vorrichtung nach Anspruch 5 umfasst.

## Claims

1. A thermal regulation method, for a vehicle of the motor vehicle type, said regulation being provided by a heat-transfer fluid travelling through a closed hydraulic circuit (5) including
- an electric fluid pump (7),
- a means (9) for thermally regulating said fluid,
- a heat exchanger (11) through which said fluid passes,
said method comprising steps in which
- a passenger compartment temperature is measured (58),
**characterized in that**
- the passenger compartment temperature is compared (58) to a first predefined temperature, and
- when said temperatures are different, said circuit is controlled (64; 66; 67) until said temperatures are substantially equal;
- the battery is recharged (56) by connecting it to an exterior electrical energy source,
- the charge of said battery is measured (57; 66), and
- when the battery is totally charged, the exterior electrical energy source is used for controlling the hydraulic circuit;
- a departure time of the vehicle is planned (55),
- a necessary duration is calculated (58) for thermally regulating the heat engine and/or the passenger compartment,
- a start-up time is determined (58) of the controlling of the hydraulic circuit,
- said controlling is started up (60; 62; 64) at the determined time,
- the actual arrival time of the driver is compared (65) with the planned time, and
- when the vehicle departs before or at the planned time, the electrical energy of the battery is used (66) for controlling the hydraulic circuit until the battery reaches a predetermined charge level, beginning from which the internal combustion engine is started up,
- when, at the planned time, the vehicle has not yet departed, said control is maintained (67) for a predefined duration, at the end of which
- when the vehicle has departed, the electrical energy of the battery is used (66) to control the hydraulic circuit until the battery reaches said charge level,
- when the vehicle has not departed, said control is stopped (69).

2. The method according to Claim 1, **characterized in that**
- a temperature of an internal combustion engine (13) associated with a fluid pump (15) is determined (58), said engine and said pump forming part of the hydraulic circuit and being passed through by said fluid,
- the temperature of said engine is compared (58) to a second predefined temperature and,
- when said temperatures are different, said hydraulic circuit is controlled (62; 66; 67) until said temperatures are substantially equal.

3. The method according to Claim 1 or 2, **characterized in that**, when the vehicle has departed, the hydraulic circuit is controlled (66) in particular as a function of a passenger compartment temperature command actuated by the driver, of a temperature measurement (58) of the heat engine, of passenger compartment temperature and/or of a measurement (58) of exterior temperature.

4. The method according to one of Claims 1 to 3, **characterized in that**
- to determine (58) the temperature of the internal combustion engine, a temperature of the fluid at the outlet of said engine and an oil temperature is measured (58),
- said engine is regulated (62) until
- the temperature of the fluid is greater than or equal to 40°C and the temperature of the oil is greater than 30°C, or
- the calculated necessary regulation duration is exceeded.

5. A device for thermal regulation, for a vehicle of the motor vehicle type, comprising a rechargeable battery, a computer, an electric motor and a passenger compartment temperature sensor, including a closed hydraulic circuit (5) transporting a heat-transfer fluid, said circuit including
- an electric fluid pump (7),
- a thermal regulation means (9) of said fluid,
- a heat exchanger (11) through which said fluid passes,
**characterized in that**
- the computer is adapted to compare the passenger compartment temperature to a first predefined temperature and, when said temperatures are different, to control (64; 66; 67) said circuit until said temperatures are substantially equal;
- the hydraulic circuit further comprises an internal combustion engine (13) associated with a mechanical fluid pump (15), and at least one temperature sensor (45) of said engine, said engine and said pump being passed through by said fluid,
- the computer is adapted to compare the temperature of said engine to a second predefined temperature and, when said temperatures are different, to control (62; 66; 67) said hydraulic circuit until said temperatures are substantially equal;
the device being further **characterized in that**
- it further comprises an exterior temperature sensor,
- the regulation means is a heater,
- the exchanger is an air heater,
- the fluid is a liquid of cooling liquid type,
- the temperature sensor of the internal combustion engine comprises a temperature sensor of the liquid and an oil temperature sensor,
- the circuit further comprises
- a valve (17) having at least two positions (AB/CD; AD/BC) and being disposed at the intersection of four ducts (33; 25; 27; 35) of said circuit, the first duct (33) originating from the heater, the second duct (25) originating from the air heater, the third duct (27) being parallel to the second duct, and the fourth duct (35) originating from the mechanical pump and comprising a first check-valve (19),
- a second intersection (21) of three ducts (31; 37; 39), the first duct (31) comprising a second check-valve (23), the second duct (37) originating from the electric pump, and the third duct (39) originating from the internal combustion engine,
- a third intersection (29) of three ducts (27; 31; 41), the first duct (27) being the one parallel to the air heater, the second duct (31) being the one comprising the second valve, and the third duct (41) originating from the air heater,
- at least one fluid temperature sensor (43) positioned between the electric pump and the valve, preferably at the outlet of the heater.

6. A vehicle of the motor vehicle type, **characterized in that** it comprises a device according to Claim 5.
